Europäisches Patentamt

(19) European Patent Office

Office européen des brevets

(11) Numéro de publication : **0 373 027 B1**

# (12) FASCICULE DE BREVET EUROPEEN

(45) Date de publication du fascicule du brevet :
21.08.91 Bulletin 91/34

(51) Int. Cl.⁵ : **F24H 8/00, F24H 1/44**

(21) Numéro de dépôt : **89403254.9**

(22) Date de dépôt : **24.11.89**

(54) **Chaudière à condensation pour chauffage à fluide caloporteur.**

(30) Priorité : **02.12.88 FR 8815812**

(43) Date de publication de la demande :
**13.06.90 Bulletin 90/24**

(45) Mention de la délivrance du brevet :
**21.08.91 Bulletin 91/34**

(84) Etats contractants désignés :
**AT BE CH DE ES GB GR IT LI LU NL SE**

(56) Documents cités :
**EP-A- 0 027 055
EP-A- 0 141 707
DE-B- 2 714 249
GB-A- 2 114 275**

(73) Titulaire : **GEMINOX, Société Anonyme
16 rue des Ecoles B.P. 1
F-29223 Saint Thegonnec (FR)**

(72) Inventeur : **Kerautret, André
Route de Coat-mez
F-29230 Landivisiau (FR)**

(74) Mandataire : **Chambon, Gérard
Cabinet Chambon 6 et 8 avenue Salvador
Allende
F-93804 Epinay-sur-Seine Cédex (FR)**

EP 0 373 027 B1

Jouve, 18, rue Saint-Denis, 75001 PARIS

## Description

L'invention concerne une chaudière à condensation pour chauffage à fluide caloporteur et plus particulièrement une chaudière à gaz pour chauffage central à eau chaude.

Le rendement d'une chaudière à fluide caloporteur est fonction des performances du brûleur et de celles de l'échangeur qui doit transférer les calories, dégagées par la combustion, au fluide caloporteur.

Le fluide caloporteur est en général de l'eau qui est, après avoir été chauffée, dirigée vers les appareils de chauffage (radiateurs, tuyauteries noyées dans le sol...) pour retourner ensuite vers l'échangeur.

Dans ce type de chaudière lorsque les performances de l'échangeur sont élevées, il se produit des phénomènes de condensation, surtout si la température de l'eau de retour des appareils de chauffage est basse.

En conséquence, il est nécessaire de prévoir le collectage et l'évacuation des condensats ainsi formés.

Les chaudières classiques présentent généralement un brûleur disposé sous l'échangeur, ce qui est particulièrement gênant étant donné les risques de chutes des condensats sur la flamme. C'est pourquoi certaines autres chaudières présentent un brûleur disposé latéralement.

Il a aussi été imaginé de disposer le brûleur en haut de la chaudière en le retournant et d'aménager un collecteur des condensats juste en-dessous de l'échangeur, ce qui permet de récupérer lesdits condensats sans perturber la flamme de combustion. Une telle chaudière est connue du GB-A-2114275.

L'invention concerne une chaudière à condensation qui offre notamment un excellent rendement grâce à une conception originale.

Le Brevet Français FR-B-2553869 et le brevet Européen correspondant EP-B-0141707 au nom du même titulaire décrivent une chaudière à condensation pour chauffage à fluide caloporteur, qui comporte un brûleur renversé dans la partie haute de la chaudière au-dessus d'un échangeur thermique dans lequel circule le fluide caloporteur et qui est formé de plusieurs étages communiquant entre eux, chaque étage ayant un ou plusieurs tubes, de manière à réaliser une longueur de circulation de fluide qui est croissante d'un étage à l'autre du bas vers le haut, tandis que l'arrivée de fluide à chauffer est branchée sur l'étage le plus bas et la sortie de fluide chauffé sur l'étage le plus haut, et que sous ledit échangeur est aménagé un collecteur des condensats et des gaz de combustion.

Une telle disposition permet de recueillir les condensats par gravité dans le bas de la chaudière tandis que la forme préconisée pour l'échangeur est particulièrement efficace puisque l'échangeur présente une surface d'échange qui croit ou décroit en même temps que la température et donc du volume des gaz chauds.

Les brevets précités décrivent un mode de réalisation dans lequel le fluide circule dans tous les tubes d'un étage avant de passer à l'étage suivant.

C'est l'un des objets de la présente invention de concevoir une circulation du fluide tout à fait originale.

Selon l'invention, les étages communiquent entre eux de manière telle que le débit du fluide caloporteur est divisé par rapport au débit d'alimentation de la chaudière dans au moins certains des tubes d'au moins certains des étages les plus éloignés du brûleur alors que le débit se retrouve en son entier dans tous les tubes d'au moins l'étage le plus proche du brûleur.

Cette alimentation en parallèle de certains tubes a pour effet de faciliter l'écoulement de l'eau dans les tubes où la charge thermique est faible, c'est-à-dire les plus éloignés de la zone de combustion. Il en résulte ainsi un plus grand débit d'eau (vitesse accrue) dans les tubes où la charge thermique est forte (à proximité du brûleur) et donc un abaissement de la température de l'eau à la sortie de l'appareil.

Un mode de réalisation dans lequel chaque étage comporte un ou plusieurs tubes dont le nombre varie d'un étage à l'autre en augmentant du bas vers le haut, est remarquable en ce que dans le premier étage rencontré en partant du bas et ayant au moins deux tubes, le fluide, après avoir traversé au moins l'un des tubes, est dérivé pour une partie dans l'autre ou les autres tubes dudit étage et pour l'autre partie, dans l'étage immédiatement supérieur, de telle sorte que le fluide circule dans tous les tubes de chaque étage avec un débit complet ou réduit par rapport au débit d'alimentation, tandis que le premier tube par rapport au sens de parcours du fluide, d'au moins l'étage le plus proche du brûleur reçoit la totalité du fluide, de manière que tous les tubes de cet étage soient parcourus par la totalité du débit d'alimentation.

Il est clair que si l'étage le plus haut est parcouru par la totalité du débit d'alimentation, il est possible que plusieurs étages soient alimentés de cette façon.

Selon un mode de réalisation tout à fait particulier, dans lequel les nombres de tubes des étages varient de bas en haut de 2 à 5 d'une unité à chaque fois, et si l'on référence les tubes par ordre alphabétique, de bas en haut et de gauche à droite en regardant les tubes par l'une de leurs extrémités, soit donc en les référençant de A à N, le fluide en totalité parcours le tube A sur lequel est branchée l'arrivée, puis son débit est divisé par moitié dans les tubes B et C, les parcours à partir de ces derniers étant après B : D-E-I et respectivement après C : F-G-H, les deux demi-débits parcourant H et I étant ensuite réunis dans le tube N de l'étage supérieur, la suite du parcours à débit complet étant à partir de N : M, L, K, J, la sortie du fluide étant branchée sur ce dernier (J).

Selon un mode de réalisation tout à fait symétrique le fluide parcours d'abord le tube B sur lequel est branchée l'arrivée, puis son débit est divisé par moitié dans les tubes A et E, les parcours à partir de ces derniers étant après A : D-C-F et respectivement après E : I-H-G, les deux demi-débits parcourant G et F étant ensuite réunis dans le tube J de l'étage supérieur, la suite du parcours à débit complet étant à partir de J : K, L, M, N, la sortie du fluide étant branchée sur ce dernier (N). Toutefois, d'autres modes de réalisation sont possibles, comme il sera précisé ci-après.

Les brevets précités préconisent d'assurer une communication d'un tube à l'autre pour chaque étage et la communication d'un étage à l'autre, au moyen de deux collecteurs munis de canaux qui sont raccordés de manière étanche avec les extrémités desdits tubes. Dans ce cas et selon l'invention, les canaux destinés à diviser le débit ou à réunir les débits partiels entre deux tubes d'un étage et un tube de l'étage suivant présentent la forme d'un V dont l'angle au sommet est obtus.

Si ces brevets décrivent aussi un brûleur particulier, la présente invention recommande toutefois d'utiliser en outre, les particularités du brûleur décrit dans le brevet FR-B-2593270.

Toujours dans le but d'éviter les points d'ébullition et d'augmenter les performances de l'appareil en abaissant les températures sur les surfaces de l'échangeur, l'invention préconise qu'au moins certains tubes, d'au moins l'étage le plus proche du brûleur soient pourvus d'un fil hélicoïdal destiné à modifier le parcours du fluide.

L'invention sera bien comprise à la lecture de la description qui va suivre, d'un mode de réalisation donné à titre d'exemple, d'une chaudière à gaz, à eau chaude, et qui se réfère aux dessins annexés dans lesquels :

— la figure 1 montre schématiquement l'intérieur d'une chaudière selon l'invention,

— la figure 2 montre schématiquement une coupe selon un plan perpendiculaire à la figure 1 passant par un tube de chaque étage de l'échangeur selon des tubes ne communiquant pas d'un étage à l'autre,

— la figure 3 est une coupe schématique horizontale de l'échangeur, pratiquée au niveau de son étage le plus près du brûleur, la chaudière étant représentée tournée dans le sens de la figure 2,

— la figure 4 est une coupe schématique horizontale pratiquée entre l'échangeur et le brûleur, la chaudière étant représentée tournée dans le sens de la figure 2.

— la figure 5 est une vue partielle plus en détail de la figure 3 montrant plus particulièrement un fil hélicoïdal disposé dans l'un des tubes de l'étage le plus près du brûleur.

Il y a lieu de noter tout d'abord que les dessins, pour permettre de mieux comprendre l'invention, sont des schémas qui ne correspondent pas toujours à la réalité, comme il sera précisé ci-après.

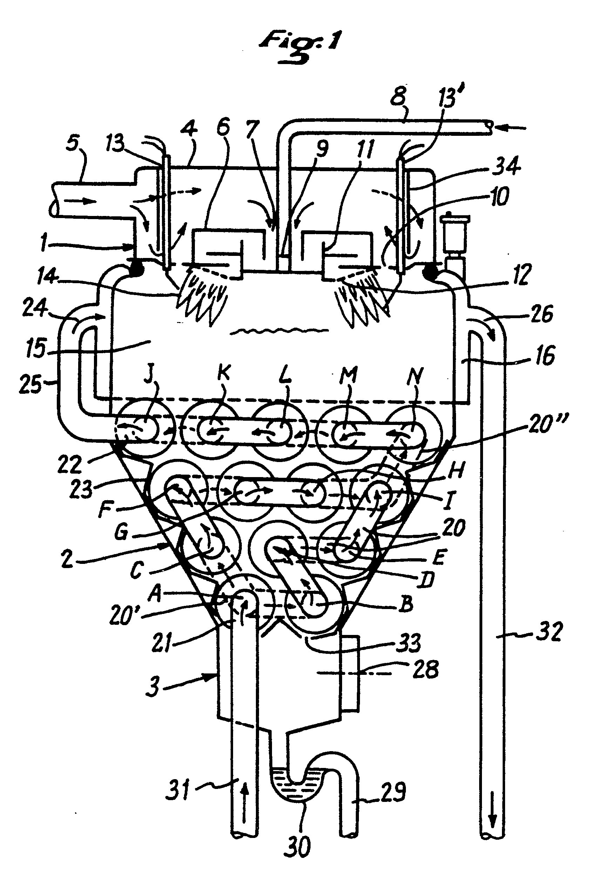

La figure 1 montre une chaudière munie de trois éléments principaux : un brûleur 1, un échangeur 2 et un collecteur 3 destiné à recueillir les condensats et les gaz de combustion.

Le brûleur 1, disposé dans la partie haute de la chaudière comporte un pot 4 dans lequel arrive tangentiellement de l'air par une arrivée 5.

Au centre du pot 4 est aménagée une chambre de mélange 6 pourvue d'une ouverture centrale 7 par laquelle passent, d'une part, l'air qui arrive en 5 et, d'autre part, une canalisation 8 d'alimentation en gaz combustible. La canalisation 8 est pourvue de trous 9 permettant l'injection du gaz dans la chambre 6.

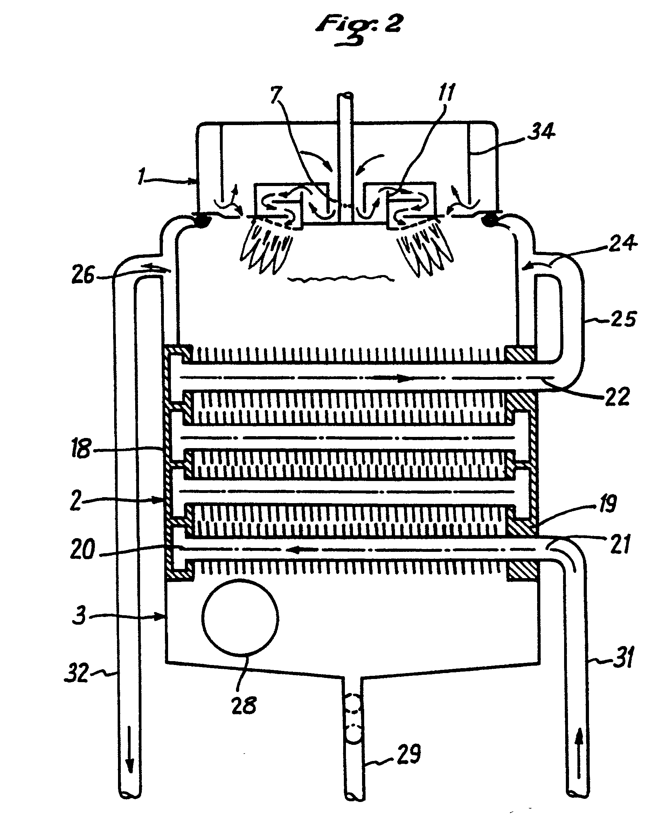

Autour de la chambre 6 un ou des passages 10 d'air secondaire sont prévus tandis qu'une chicane 11 et une grille 12 sont aménagées sous ladite chambre, des électrodes respectivement d'allumage 13 et de contrôle de flamme par ionisation 13' étant en outre prévues au voisinage de la grille 12. La forme adoptée pour la chicane 11, en partie tubulaire, associée à l'entrée 7 également tubulaire mais imbriquée, de la chambre 6, permet d'allonger le parcours commun du gaz et de l'air, ce qui favorise l'homogénéisation du mélange (figures 1 et 2). Par ailleurs, pour uniformiser la répartition de l'air dans les passages 10, le pot 4 est avantageusement pourvu d'une couronne 34 disposée, comme le montrent les figures 1 et 2, de manière à ménager un espace annulaire de circulation d'air. L'air qui arrive tangentiellement est ensuite contraint de passer sous la couronne, assurant une distribution d'air plus uniforme.

Le brûleur ainsi décrit fonctionne de la manière suivante. L'air comburant arrive en 5, comme précisé ci-avant, dans le pot 4 avant de parvenir dans la chambre 6 où l'air se mélange avec le gaz combustible provenant des trous 9 de la canalisation 8.

Le mélange d'air et de gaz peut ainsi traverser la grille 12 après le passage, comme déjà dit, de la chicane 11 et être enflammé au moyen de l'électrode 13, tandis que de l'air secondaire arrive par les passages 10.

Il est clair qu'ainsi le brûleur fournit une flamme annulaire 14 dirigée vers le bas.

La flamme 14 brûle dans une chambre de combustion 15, dite froide, limitée latéralement par une chemise d'eau 16 dont il sera question ci-après et par l'échangeur 2.

L'échangeur 2 est formé de plusieurs tubes A à N identiques et parallèles entre eux, qui sont pourvus d'ailettes (comme le montrent les figures 2 à 5) et qui sont disposés horizontalement en plusieurs étages.

L'étage le plus bas comporte ici deux tubes et chaque étage comporte à chaque fois un tube de plus que l'étage précédent, soit 2, 3, 4 et 5 tubes (en partant du bas vers le haut).

Les deux extrémités de chaque tube sont raccordées à deux collecteurs 18 et 19 (figures 2 à 4) formés de plaques épaisses qui sont munis intérieurement de canaux tels que 20, 20' et 20" raccordés de manière étanche auxdits tubes. Les collecteurs 18 et 19 sont également pourvus d'une arrivée d'eau 21 (figures 1 et 2) et d'une sortie d'eau 22, lesdits canaux étant tels que l'eau qui arrive par 21 et ressort par 22 circule entre temps, comme le montre schématiquement la figure 1, en passant dans tous les tubes de chaque étage.

Les tubes A à N présentent ici tous la même longeur de telle sorte que la forme générale de l'échangeur est celle d'un prisme droit trapézoïdal. Il est clair toutefois que l'étage le plus bas pourrait n'avoir qu'un tube ((prisme droit triangulaire), que la longueur et le nombre des tubes pourraient varier d'un étage à l'autre (forme tronc-pyramidale), ou que seule la longueur des tubes pourrait varier.

Sur la figure 1, les tubes sont référencés de A à N, par ordre alphabétique de gauche à droite et de bas en haut.

C'est le tube A de l'étage le plus bas qui reçoit l'arrivée 21 et le tube J de l'étage le plus haut qui est branché sur la sortie 22.

Comme le montre bien la figure 1, un canal 20' en forme de V ouvert et représenté en pointillés (canal aménagé à l'arrière par rapport à ladite figure 1) permet de diviser le débit de fluide qui vient de parcourir le tube A, pour le distribuer, comme le montrent les flèches, dans les tubes B et C.

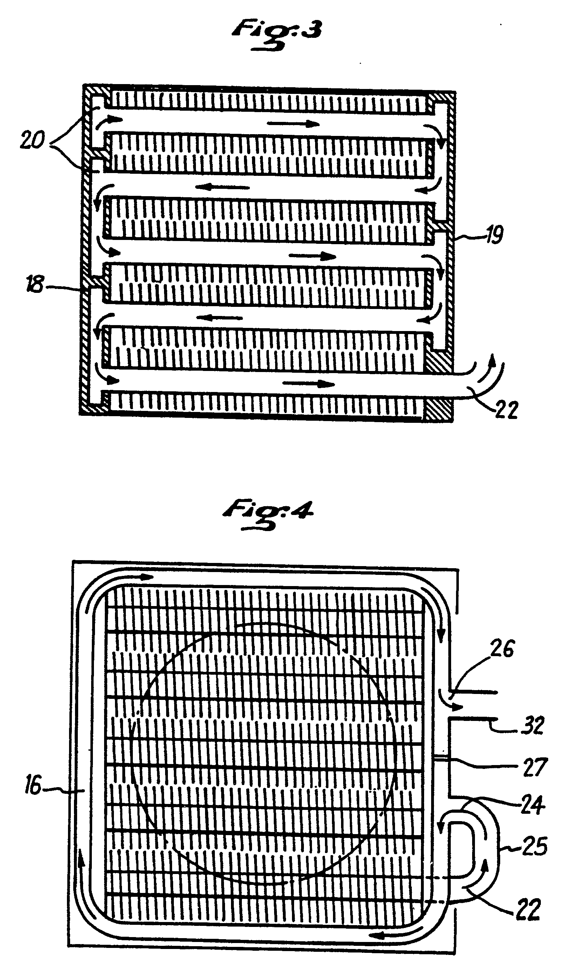

De chacun des tubes B et C, le fluide parcourera B, D, E, I et respectivement C, F, G, H en passant d'un tube à l'autre par un canal tel que 20. L'une des extrémités des tubes H, I et N communiquent entre-elles par un canal 20" de même forme que le canal 20', de telle sorte que les "demi-débits" provenant des tubes H et I se réunissent pour constituer un débit complet dans le premier tube N (par rapport au sens du parcours) de l'étage le plus proche du brûleur, la circulation de fluide dans cet étage étant plus particulièrement visible sur la figure 3.

Il est clair toutefois que si l'on regarde les autres extrémités des tubes (figure 1 à l'envers) et si l'on référencie les tubes de la même manière, ou bien si l'on branche l'arrivée 21 et la sortie 22 sur les tubes respectivement B et N (au lieu et place des tubes A et J), on obtient une circulation tout à fait comparable en intervertissant les lettres précédantes de la manière suivante : A et B, C et E, F et I, G et H, J et N, K et M, seules les lettres médianes D et L étant inchangées. De la sorte, le parcours B-D-E-I devient A-D-C-F, le parcours C-F-G-H devient E-I-H-G et le parcours N-M-L-K-J devient J-K-L-M-N. Toutefois, si ces parcours sont préférentiels, il est possible d'envisager à partir de la disposition de la figure 1, par exemple une variante B-E-D-I (à la place de B-D-E-I). Il est intéressant de noter, qu'après division du débit, chaque "demi-débit" circule dans un nombre égal de tubes. Même en respectant cette règle, on pourrait encore imaginer d'autres parcours, mais nécessitant des canaux de formes moins faciles.

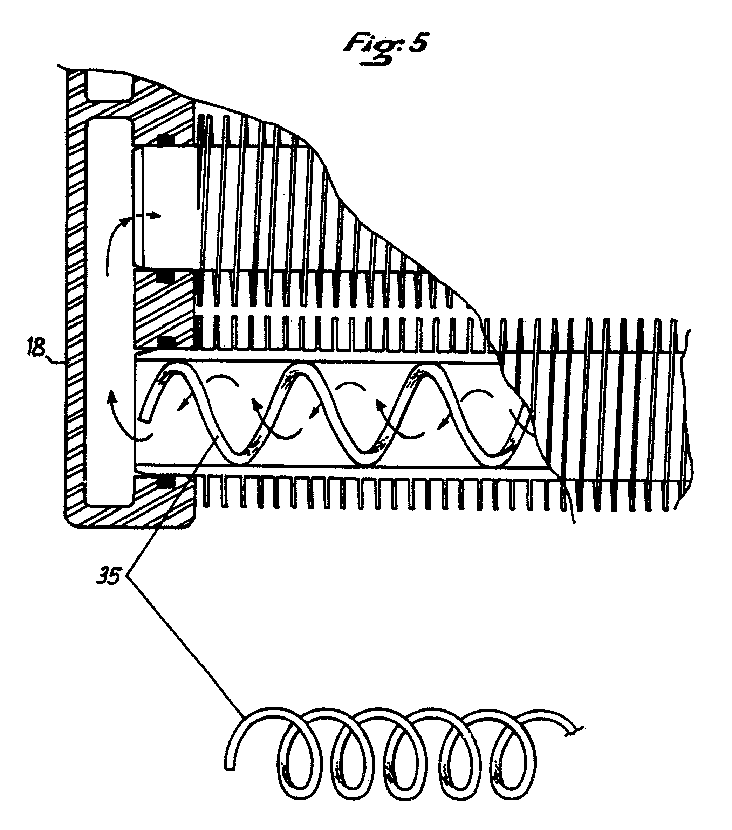

La figure 5 montre un fil 35, par exemple en aluminium, enroulé en hélice et disposé dans un ou tous les tubes d'au moins l'étage le plus proche du brûleur. Un fil de cette forme permet d'imprimer à l'eau (comme le montrent les flèches), un mouvement turbulent de manière à allonger la parcours en le rendant sinueux. Ainsi, on obtient une meilleure homogénéité thermique dans le flux liquide.

La figure 1 montre en outre, un déflecteur 23, formant un système de chicanes et qui est aménagé de manière à venir en partie au contact ou au voisinage des ailettes des tubes extérieurs (A, B, C, E, F, I, J, N), à l'exception bien sûr du dessus des tubes du dernier étage et en ménageant au moins un passage 33 sous les tubes (A et B) du premier étage.

La sortie d'eau 22 de l'échangeur, prévue dans l'un des collecteurs en regard de l'extrémité de l'un des deux tubes extérieurs (ici J, comme déjà dit) du dernier étage est raccordée par une canalisation 25 à une arrivée 24 de la chemise d'eau 16, cette dernière étant pourvue d'une sortie 26.

Pour faciliter la compréhension des dessins, l'entrée 24 et la sortie 26 de la chemise d'eau 16 sont représentées sur les figures 1 et 2 de chaque côté, alors que la figure 4 montre qu'en réalité cette arrivée 24 et cette sortie 26 sont aménagées au voisinage l'une de l'autre, du même côté que l'arrivée 21 et la sortie 22 de l'échangeur, c'est-à-dire ici sur la même face avant de la figure 1.

La chemise d'eau 16 est pourvue d'une cloison 27 qui sépare l'entrée 24 et la sortie 26, de manière à permettre une circulation d'eau entre ladite entrée et ladite sortie.

Le collecteur 3 (figure 1) disposé sous l'échangeur 2, présente une sortie 28 pour les gaz de combustion et dans sa partie basse, un conduit 29 d'évacuation des condensats, muni d'un siphon 30.

Le fonctionnement de la chaudière décrite ci-avant est simple. L'arrivée d'eau 21 est branchée sur une conduite 31 de retour chauffage, c'est-à-dire qu'elle communique avec l'eau sortant des appareils de chauffage (radiateurs par exemple).

L'eau circule dans l'échangeur comme décrit ci-avant, avec tous les avantages dus, notamment, aux dérivations, pour ressortir en 22, entrer en 24 dans la chemise 16 et en ressortir en 26 pour déboucher dans une canalisation 32 de départ chauffage.

L'eau qui circule dans l'échangeur 2, est ainsi chauffée par les gaz chauds provenant de la chambre de combustion 15, cette dernière étant en outre refroidie par la chemise 16.

Les gaz de combustion sont avantageusement canalisés vers l'échangeur par le déflecteur 23 et aboutissent dans le collecteur 3 pour sortir par la sortie 28 tandis que les condensats tombent par gravité dans le collecteur 3 en étant éventuellement dirigés aussi par le déflecteur 23. Les condensats sont ensuite évacués par la canalisation 29.

La forme de l'échangeur, associé à la circulation de l'eau dans celui-ci, comme le montre la figure 1, procure de bons échanges thermiques tout en permettant une récupération facile des condensats.

En outre, si l'invention concerne plus spécialement une chaudière à gaz, il est bien sûr possible d'utiliser un brûleur au fioul, à vaporisation par exemple, la nature des matériaux choisis étant alors adaptée à ce type de brûleur.

Enfin, de très nombreux aménagements non décrits, sont évidemment prévus tels que : vise-flamme, détecteur de débit, circulateur de chauffage, ventilateur etc.

## Revendications

1. Chaudière à condensation pour chauffage à fluide caloporteur, comportant un brûleur (1) renversé dans la partie haute de la chaudière au-dessus d'un échangeur thermique (2) dans lequel circule le fluide caloporteur et qui est formé de plusieurs étages communiquant entre eux, chaque étage ayant un ou plusieurs tubes (A à N), de manière à réaliser une longueur de circulation de fluide qui est croissante d'un étage à l'autre du bas vers le haut, tandis que l'arrivée (21) de fluide à chauffer est branchée sur l'étage le plus bas et la sortie (22) de fluide chauffé sur l'étage le plus haut, et que sous ledit échangeur (2) est aménagé un collecteur (3) des condensats et des gaz de combustion, chaudière caractérisée en ce que les étages communiquent entre eux de manière telle que le débit du fluide caloporteur est divisé par rapport au débit d'alimentation de la chaudière dans au moins certains des tubes d'au moins certains des étages les plus éloignés du brûleur alors que le débit se retrouve en son entier dans tous les tubes (J à N) d'au moins l'étage le plus proche du brûleur.

2. Chaudière selon la revendication 1, dans laquelle chaque étage comporte un ou plusieurs tubes dont le nombre varie d'un étage à l'autre en augmentant du bas vers le haut, caractérisée en ce que dans le premier étage rencontré en partant du bas et ayant au moins deux tubes (A et B), le fluide, après avoir traversé au moins l'un des tubes, est dérivé pour une partie dans l'autre ou les autres tubes dudit étage et pour l'autre partie, dans l'étage immédiatement supérieur, de telle sorte que le fluide circule dans tous les tubes de chaque étage avec un débit complet ou réduit par rapport au débit d'alimentation, tandis que le premier tube (N) par rapport au sens de parcours du fluide, d'au moins l'étage le plus proche du brûleur reçoit la totalité du fluide, de manière que tous les tubes (J à N) de cet étage soient parcourus par la totalité du débit d'alimentation.

3. Chaudière selon la revendication 2, dans laquelle les nombres de tubes des étages varient de bas en haut de 2 à 5 et d'une unité à chaque fois, caractérisée en ce que si l'on référence les tubes par ordre alphabétique, de bas en haut et de gauche à droite en regardant les tubes par l'une de leurs extrémités, soit donc en les référençant de A à N, le fluide en totalité parcours le tube A sur lequel est branchée l'arrivée (21), puis son débit est divisé par moitié dans les tubes B et C, les parcours à partie de ces derniers étant après B : D-E-I et respectivement après C : F-G-H, les deux demi-débits parcourant H et I étant ensuite réunis dans le tube N de l'étage supérieur, la suite du parcours à débit complet étant à partir de N: M, L, K, J, la sortie (22) du fluide étant branchée sur ce dernier (J).

4. Chaudière selon la revendication 2, dans laquelle, les nombres de tubes des étages varient de bas en haut de 2 à 5 et d'une unité à chaque fois, caractérisée en ce que si l'on référence les tubes par ordre alphabétique, de bas en haut et de gauche à droite en regardant les tubes par l'une de leurs extrémités, soit donc en les référençant de A à N, le fluide en totalité parcours le tube B sur lequel est branchée l'arrivée (21), puis son débit est divisé par moitié dans les tubes A et E, les parcours à partir de ces derniers étant après A : D-C-F et respectivement après E : I-H-G, les deux demi-débits parcourant G et F étant ensuite réunis dans le tube J de l'étage supérieur, la suite du parcours à débit complet étant à partir de J : K, L, M, N, la sortie (22) du fluide étant branchée sur ce dernier (N).

5. Chaudière selon l'une des revendication 1 à 4, dans laquelle la communication d'un tube à l'autre pour chaque étage et la communication d'un étage à l'autre sont assurées par deux collecteurs (18, 19) munis de canaux (20, 20', 20"), qui sont raccordés de manière étanche avec les extrémités desdits tubes, chaudière caractérisée en ce que les canaux (20', 20") destinés à diviser le débit ou à réunir les débits partiels entre deux tubes d'un étage et un tube de l'étage suivant présentent la forme d'un V dont l'angle au sommet est obtus.

6. Chaudière selon l'une des revendications 1 à 5, caractérisée en ce qu'au moins certains tubes (J à N), d'au moins l'étage le plus proche du brûleur sont pourvus d'un fil hélicoïdal (35) destiné à modifier le parcours du fluide.

## Patentansprüche

1. Brennwertkessel für Heizung mit Wärmetransportflüssigkeit mit einem hängend im oberen Bereich des Kessels oberhalb eines thermischen Austauschers (2) angeordneten Brenner (1), wobei der Austauscher, in welchem die Wärmetransportflüssigkeit zirkuliert, aus mehreren Etagen besteht, die untereinander in Verbindung stehen, und jede Etage ein oder mehrere Rohre (A–N) aufweist derart, daß ein Zirkulationsweg der Flüssigkeit entsteht, der von einer Etage zur anderen von unten nach oben zunimmt und die Zuführung (21) der zu erhitzenden Flüssigkeit mit der niedrigsten Etage und die Ableitung (22) für die erhitzte Flüssigkeit mit der obersten Etage verbunden ist und unter dem Austauscher (2) ein Kondensat- und Rauchgassammler (3) angeordnet ist, dadurch gekennzeichnet, daß die Etagen untereinander derart verbunden sind, daß die Menge an Wärmetransportflüssigkeit, bezogen auf die dem Kessel zugeführte Menge, auf wenigstens bestimmte Rohre wenigstens einiger Etagen, die vom Brenner am weitesten entfernt sind, aufgeteilt wird, während die Menge sich in ihrer Gesamtheit in allen Rohren (J–N) wenigstens in der Etage wiederfindet, die dem Brenner am nächsten ist.

2. Kessel nach Anspruch 1, in welchem jede Etage ein oder mehrere Rohre aufweist, deren Anzahl von einer Etage zur anderen sich ändert und von unten nach oben zunimmt, dadurch gekennzeichnet, daß in der von unten gesehen ersten Etage, die wenigstens zwei Rohre (A und B) aufweist, die Flüssigkeit, nachdem sie wenigstens eines der Rohre durchströmt hat, zu einem Teil in das andere oder die anderen Rohre dieser Etage und zum anderen Teil in die unmittelbar darüber befindliche Etage abgeleitet wird derart, daß die Flüssigkeit in allen Rohren jeder Etage in einer vollständigen oder verringerten Menge, bezogen auf die zugeführte Menge, zirkuliert, während das in Bezug auf die Wegstrecke der Flüssigkeit erste Rohr (N) wenigstens der dem Brenner nächsten Etage die Gesamtheit der Flüssigkeit erhält derart, daß alle Rohre (J–N) dieser Etage von der Gesamtheit der zugeführten Menge durchflossen werden.

3. Kessel nach Anspruch 2, in welchem die Anzahl der Rohre der Etagen sich von unten nach oben von zwei auf fünf und jedesmal um eine Einheit ändern, dadurch gekennzeichnet, daß, wenn man die Rohre von unten nach oben und von links nach rechts bei Betrachtung der Rohre von einem ihrer Enden in alphabetischer Reihenfolge von A bis N bezeichnet, die Flüssigkeit in ihrer Gesamtheit das Rohr A durchströmt, mit welchem die Zuleitung (21) verbunden ist, worauf seine Menge hälftig auf die Rohre B und C aufgeteilt wird und die Wegstrecke von letzteren hinter B von D-E-I und hinter C von F-G-H gebildet wird und die beiden Halb-Mengen, die H und I durchlaufen, danach im Rohr N in der oberen Etage vereinigt werden und die Reihenfolge der Wegstrecke der vollständigen Menge hinter N von M, L, K, J gebildet wird und die Ableitung (22) der Flüssigkeit mit letzterem (N) verbunden ist.

4. Kessel nach Anspruch 2, bei welchem die Anzahl der Rohre der Etagen von unten nach oben sich um jedesmal eine Einheit von 2 auf 5 ändert, dadurch gekennzeichnet, daß, wenn man die Rohre von unten nach oben und von links nach rechts bei Betrachtung der Rohre von einem ihrer Enden aus in alphabetischer Reihenfolge von A bis N bezeichnet, die Flüssigkeit in ihrer Gesamtheit das Rohr B durchströmt, mit welchem die Zuführung (21) verbunden ist, worauf seine Menge hälftig auf die Rohre A und E aufgeteilt wird, und die Wegstrecke von diesen letzteren hinter A von D-C-F und hinter E von I-H-G gebildet wird und die beiden Halb-Mengen, die G und F durchlaufen, danach im Rohr J in der oberen Etage vereinigt werden und die Reihenfolge der Wegstrecke der vollständigen Menge hinter J von K, L, M, N gebildet wird und die Ableitung (22) der Flüssigkeit mit letzterem (N) verbunden ist.

5. Kessel nach einem der Ansprüche 1–4, bei welchem die Verbindung von einem Rohr zum anderen in jeder Etage und die Verbindung von einer Etage zur anderen durch zwei Sammler (18, 19), die mit Kanälen (20, 20', 20") versehen sind, bewirkt werden, und die Kanäle (20, 20', 20") dicht mit den Enden besagter Rohre verbunden sind, dadurch gekennzeichnet, daß die Kanäle (20', 20"), die dazu dienen, die Menge zu teilen oder die Teilmengen zu vereinigen, zwischen zwei Rohren einer Etage und einem Rohr der folgenden Etage die Form eines V aufweisen, dessen Spitzenwinkel stumpf ist.

6. Kessel nach einem der Ansprüche 1–5, dadurch gekennzeichnet, daß wenigstens bestimmte Rohre (J–N) wenigstens der dem Brenner am nächsten befindlichen Etage mit einem schraubenförmigen Draht (35) versehen sind, der dazu dient, den Weg der Flüssigkeit zu modifizieren.

## Claims

1. Condensation boiler for heating with a heat-conveying fluid, comprising an inverted burner (1) in the upper part of the boiler above a heat exchanger (2) in which the heat-conveying fluid circulates and which is formed of a plurality of intercommunicating stages, each stage having one or more tubes (A to N), so as to form a fluid circulation length which increases from one stage to the next from the bottom upwards, while the inlet (21) for fluid to be heated is connected to the lowest stage and the outlet (22) for heated fluid is connected to the highest stage, and in that under said heat exchanger (2) is arranged a collector (3) for the condensates and the combustion gases, said boiler being characterised in that the stages intercommunicate so that the flow of the heat-conveying fluid is divided in relation to the feeding flow of the boiler in at least some of the tubes of at least some of the stages furthest from the burner whereas the flow is to be found in its entirety again in all the tubes (J to N) of at least the stage closest to the burner.

2. Boiler as in claim 1, in which each stage comprises one or more tubes the number of which varies from one stage to the next increasing from the bottom upwards, characterised in that in the first stage encountered starting from the bottom and having at least two tubes (A and B), the fluid, after passing through at least one of the tubes, is tapped in part from the other tube or tubes of said stage and in part from the immediately higher stage, so that the fluid circulates in all the tubes of each stage with a complete or reduced flow in relation to the feeding flow, while the first tube (N) in relation to the direction of passage of the fluid, of at least the stage closest to the burner receives the totality of the fluid, so that the totality of the feeding flow passes through all the tubes (J to N) of this stage.

3. Boiler as in claim 2, in which the numbers of tubes of the stages vary from the bottom upwards from 2 to 5 and by one unit each time, characterised in that if the tubes are given references in alphabetical order, from the bottom upwards and from left to right looking at the tubes from one of their ends, i.e. giving them the references from A to N, the totality of the fluid passes through the tube A to which is connected the inlet (21), then its flow is divided in half in the tubes B and C, the paths from the latter being respectively after B : D-E-I and after C : F-G-H, the two half-flows passing through H and I then being brought together in the tube N of the higher stage, the continuation of the path with the complete flow being from N : M, L, K, J, the outlet (22) of the fluid being connected to the latter (J).

4. Boiler as in claim 2, in which the numbers of tubes of the stages vary from the bottom upwards from 2 to 5 and by one unit each time, characterised in that if the tubes are given references in alphabetical order, from the bottom upwards and from left to right looking at the tubes from one of their ends, i.e. giving them the references from A to N, the totality of the fluid passes through the tube B to which is connected the inlet (21), then its flow is divided in half in the tubes A and E, the paths from the latter being respectively after A : D-C-F and after E : I-H-G, the two half-flows passing through G and F then being brought together in the tube J of the higher stage, the continuation of the path with the complete flow being from J : K, L, M, N, the outlet (22) of the fluid being connected to the latter (N).

5. Boiler as in one of claims 1 to 4, in which the communication from one tube to the next for each stage and the communication from one stage to the next are effected by two collectors (18, 19) provided with channels (20, 20', 20"), which are connected in a sealed fashion with the ends of said tubes, said boiler being characterised in that the channels (20', 20") designed to divide the flow or to bring the partial flows together between two tubes of a stage and one tube of the following stage exhibit the form of a V the apex angle of which is obtuse.

6. Boiler as in one of claims 1 to 5, characterised in that at least some tubes (J to N) of at least the stage closest to the burner are provided with a helical wire (35) designed to modify the path of the fluid.

Fig.1

## Fig. 2

*Fig.3*

*Fig.4*

Fig. 5